# EUROPEAN PATENT APPLICATION

(11) **EP 4 537 957 A1**
(43) Date of publication of application: **16.04.2025**
(21) Application number: 24206503.5
(22) Date of filing: 14.10.2024
(51) Int. Cl.: B22F 10/64, B33Y 40/20, B60N 2/42, B60N 2/427, B64D 11/06, B64D 25/04, C22C 1/04, C22C 21/02, C22F 1/043, F16F 7/12, B22F 5/10, B22F 10/28, B33Y 10/00, B33Y 80/00

(54) **METHOD OF MANUFACTURING AN ADDITIVELY MANUFACTURED ENERGY ABSORBER TO IMPROVE PERFORMANCE**

(30) Priority: 13.10.2023 IN 202341069114; 27.11.2023 US 202318519499
(71) Applicant: B/E Aerospace, Inc., Winston-Salem, NC 27105 (US)
(72) Inventor: ACHARYA, Pradeep, 560072 Bangalore (IN); RAO, Sreekanth, 560061 Bangalore (IN)
(74) Representative: Dehns

(57) **Abstract**

A method of manufacturing an energy absorber and a method for thermally treating an additively manufactured energy absorber to maximize energy absorbing performance. In embodiments, thermally treating the manufactured energy absorber includes heating the build plate including the built energy absorber in a heating furnace to a solutionizing temperature in a range of 300°C to 550°C, more preferably substantially 430°C, maintaining the solutionizing temperature for a predefined time period, and water quenching the heated build plate including the built energy absorber. In embodiments, following the thermal treatment, the built energy absorber is detached from the build plate and optionally subjected to a finish process. In embodiments, the energy absorber comprises the aluminum alloy AISi10Mg.

## Description

### TECHNICAL FIELD AND BACKGROUND

The present disclosure relates generally to compressible energy absorbers, and more particularly, to a method of thermally processing an additively manufactured energy absorber to improve the energy absorption performance thereof, as well as an improved energy absorber for use in seating and other applications.

Certain seating applications utilize energy absorbers to control seat motions to lessen forces on the seat occupant. For example, some pilot seats may utilize a compressible energy absorber in the form of a collapsible lattice structure. In use, the lattice structure acts in compression to absorb compressive force on the lattice structure in contact with another component movable along a motion path.

In some applications, the lattice structure may be a variable density lattice structure customizable to absorb impact energy according to, for example, the anticipated average weight of a seat occupant considering the construction of the seat components. For example, a less porous (i.e., denser) lattice structure may be used to support a stiffer seat, whereas a more porous (i.e., less dense) lattice structure may be used to support a less stiff seat. In use, the lattice structure may undergo a plastic deformation (e.g., bending and/or folding behavior) in response to a threshold load value being exceeded.

Additively manufactured energy absorbers typically undergo post-processing treatments that include the removal of loose powder and the support structure, as well as heat treatments (e.g., thermal annealing) to relieve residual stresses and improve mechanical properties. While strong, the present inventors have found that conventionally thermally processed energy absorbing additive structures have too high a threshold crushing force, and further exhibit brittleness and chipping failure behavior under compressive testing.

Therefore, what is needed is an improved thermal process for energy absorbing additive structures, for instance AISi10Mg structures, that results in a clean folding behavior with maximum energy absorption per unit stroke distance, and with a low threshold crushing force.

### BRIEF SUMMARY

In one aspect, the present disclosure provides a method of manufacturing an energy absorber. In embodiments, the method includes providing a build plate and building, by an additive manufacturing process, an energy absorber atop the build plate. In embodiments, the method continues with thermally treating the built energy absorber by heating the build plate including the built energy absorber in a heating furnace to a solutionizing temperature in a range of 300°C to 550°C, maintaining the solutionizing temperature for 4 to 6 hours, preferably about 5 hours, and water quenching the heated build plate including the built energy absorber. In embodiments, following the heat treatment, the method continues with removing the energy absorber from the build plate and subjecting the energy absorber to a finishing process such as polishing.

In at least some embodiments, the solutionizing temperature is in the range of 350°C to 500°C.

In at least some embodiments, the solutionizing temperature is in the range of 400°C to 450°C.

In at least some embodiments, the solutionizing temperature is substantially 430°C.

In at least some embodiments, the energy absorber is a composition of AlSi10Mg.

In at least some embodiments, the additive manufacturing process is at least one of selective laser melting (SLM) and electron beam melting (EBM).

In at least some embodiments, a ramp-up rate to the solutionizing temperature is about 10°C per minute.

In at least some embodiments, the finish processing comprises at least one polishing process.

In at least some embodiments, the built energy absorber is a collapsible structure comprising a hub, an exterior skin surrounding the hub, and a plurality of spokes extending outwardly from the hub to the exterior skin, wherein each spoke is tapered along a length thereof.

In at least some embodiments, the hub, the exterior skin, and the plurality of spokes are symmetric about a central longitudinal axis of the hub, each spoke is uniformly distant from neighboring spokes about the hub, and the exterior skin is polygonal with each vertex being connected to a spoke.

According to another aspect, the present disclosure provides a method of thermally treating an additively manufactured energy absorber. In embodiments, the method includes the steps of providing a build plate including a built, by an additive manufacturing process, energy absorber positioned atop the build plate, heating the build plate including the built energy absorber in a heating furnace to a solutionizing temperature in a range of 300°C to 550°C, maintaining the solutionizing temperature for a time period up to about 5 hours, water quenching the heated build plate including the built energy absorber, and removing the built energy absorber from the build plate.

In at least some embodiments, a height of the built energy absorber is no more than about 5 inches, and an outer diameter of the built energy absorber is no more than about 2 inches.

In a further aspect, the present disclosure provides an energy absorber, manufactured according to the method described herein, for use in an aircraft seat application.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a flow diagram illustrating a method of manufacturing an energy absorber, according to an embodiment of the present disclosure;
FIG. 2 is a flow diagram illustrating a method of heat treating an additively manufactured energy absorber, according to an embodiment of the present disclosure;
FIGS. 3A-C are graphs illustrating heat treatment examples, according to an embodiment of the present disclosure;
FIGS. 4A and 4B illustrates an energy absorber before and after plastic deformation, respectively, according to an embodiment of the present disclosure; and
FIG. 5 illustrates an energy absorber according to the present disclosure utilized in an aircraft seating application.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, the present disclosure is directed to methods for manufacturing energy absorbers including additive manufacturing and heat treatment processes, heat treatments for improving performance of energy absorbers, and aircraft seating applications including energy absorbers. In embodiments, energy absorbers according to the present disclosure operate based on performance of a collapsible structure with varying stiffness, and can be used, for example, in helicopter seating systems. The collapsible structure of the energy absorber is configured to absorb input kinetic energy by successive buckling or crushing due to axial compression. In embodiments, a varying stiffness introduced along the length of the energy absorber achieves variable energy absorption for various occupants ranging from the 5^{th} to the 95^{th} percentile occupant size.

Some advantages of the disclosed energy absorbers include, but are not limited to, predictable elastic deformation behavior, maximum energy absorption per unit stroke distance, customizable threshold crushing force, reduction of deformations in the finished product, reduced heat treatment cycle, and reduced manufacturing costs.

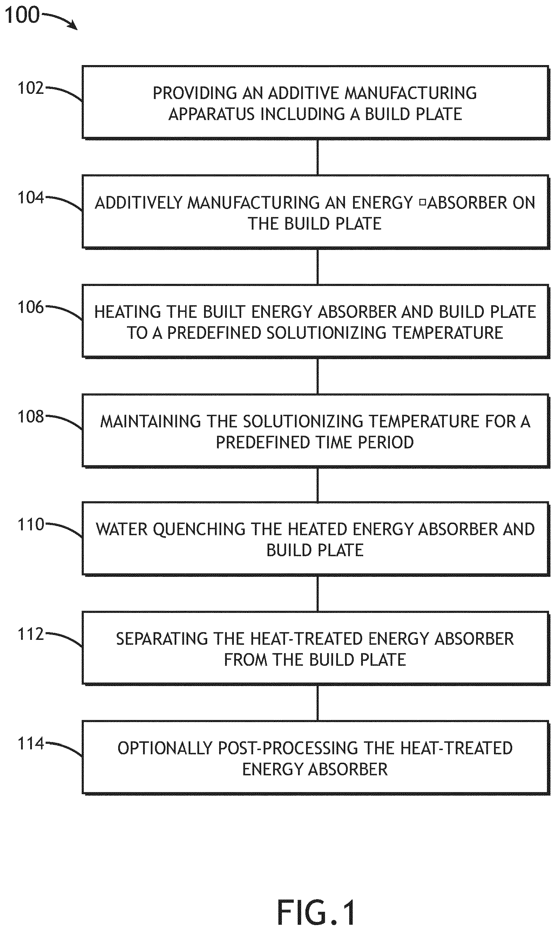

FIG. 1 illustrates an example implementation of a method 100 for manufacturing an energy absorber as described herein. In general, certain operations of disclosed processes (e.g., method 100) may be performed in an arbitrary order, unless otherwise provided in the claims.

At step 102, the method 100 includes providing an additive manufacturing system including a build plate. Additive manufacturing systems suitable for building an energy absorber according to the present disclosure include, but are not limited to, selective laser melting (SLM), electron beam melting (EBM), laser powder bed fusion (LPBF), and other well-known additive manufacturing processes. At step 104, the method 100 includes building the energy absorber on (e.g., atop) the build plate layer-by-layer until completion.

At step 106, the method 100 includes heating the build plate including the built energy absorber (i.e., without separating the built energy absorber from the build plate) in a heating furnace to a solutionizing temperature in a range of 300°C to 550°C, preferably 350°C to 500°C, more preferably 400°C to 450°C, and most preferably substantially 430°C (e.g., 430°C ±5°C). At step 108, the method 100 includes maintaining the solutionizing temperature for a time of 4 to 6 hours, more preferably substantially 5 hours. In embodiments, for the defined solutionizing temperature ranges, a holding time of substantially 5 hours was determined to be optimal. In a step 110, the method 100 includes water quenching the heated build plate including the attached built energy absorber (i.e., still without separating the built energy absorber from the build plate).

The present inventors found that such a solutionizing temperature range, holding time, and water quench cooling as mentioned above, for a built energy absorber of the composition AlSi10mG, resulted in maximum energy absorption performance per unit stroke distance. At step 112, the method 100 includes separating the heat treated built energy absorber from the build plate. At step 114, the method 100 concludes with optionally finish processing the heat treated energy absorber, for instance with a glass bead powder polish. The method 100 may further include any step or operation implied or required by the embodiments of the current energy absorbers described herein.

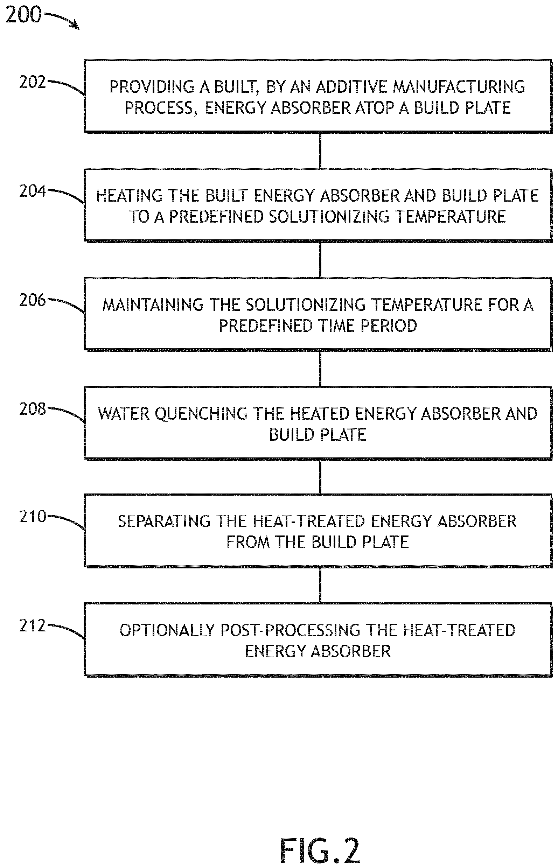

FIG. 2 illustrates an example implementation of a method 200 for thermally treating an already additively manufactured energy absorber. In general, certain operations of disclosed processes (e.g., method 200) may be performed in an arbitrary order, unless otherwise provided in the claims. At step 202, the method includes providing a build plate including an already built, by an additive manufacturing process, energy absorber positioned atop the build plate (i.e., attached to the built plate post build).

At step 204, the method 200 includes heating the build plate including the built energy absorber (i.e., without separating the built energy absorber from the build plate) in a heating furnace to a solutionizing temperature in a range of 300°C to 550°C, preferably 350°C to 500°C, more preferably 400°C to 450°C, and most preferably substantially 430°C (e.g., 430°C ±5°C). At step 206, the method 200 includes maintaining the solutionizing temperature for a time of 4 to 6 hours, more preferably substantially 5 hours. In embodiments, for the defined solutionizing temperature ranges, a holding time of substantially 5 hours was determined to be optimal. In a step 208, the method 200 includes water quenching the heated build plate including the attached built energy absorber (i.e., still without separating the built energy absorber from the build plate). At step 210, the method 200 includes separating the heat treated built energy absorber from the build plate. At step 212, the method 200 concludes with optionally finish processing the heat treated energy absorber, for instance with a glass bead powder polish. The method 200 may further include any step or operation implied or required by the embodiments of the current energy absorbers described herein.

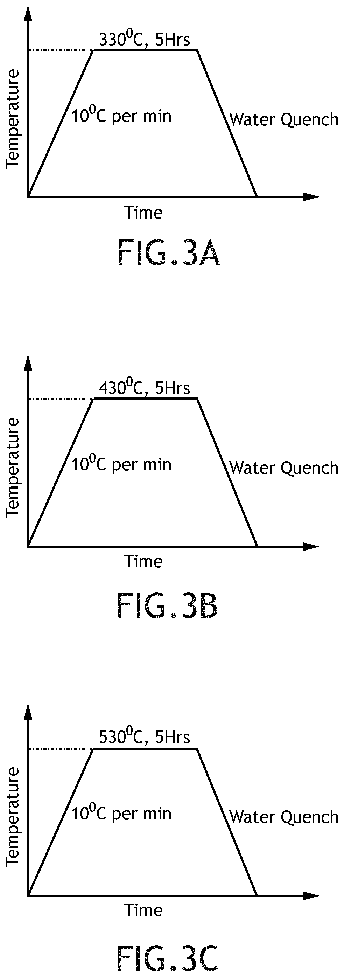

FIGS. 3A-C illustrate exemplary heat treatment cycles according to the methods 100, 200 described above, which obviate the need for conventional artificial aging and air quench processes.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to, one or more of the steps disclosed herein.

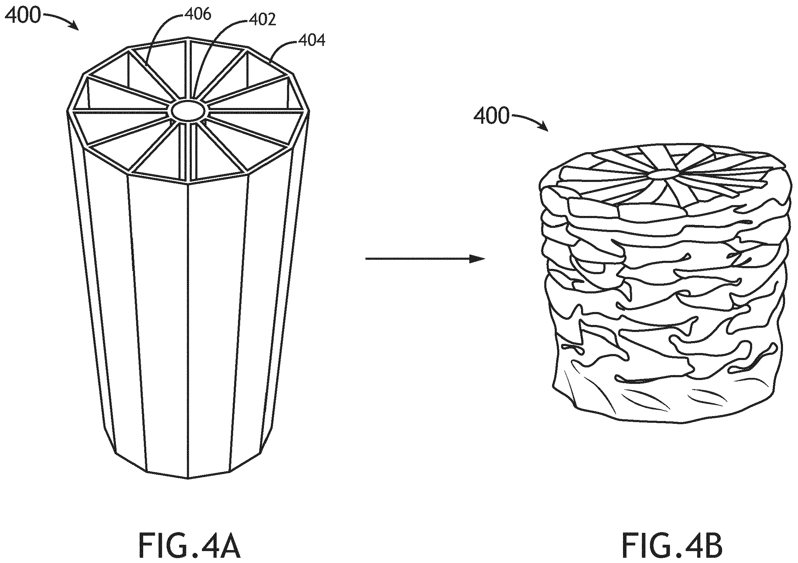

FIG. 4A and 4B illustrate a particular embodiment of an additively manufactured energy absorber of the composition AISi10Mg. In embodiments, the composition of AlSi10Mg may include about 90% aluminum, about 9% silicon, and about 1% magnesium. In embodiments, the aluminum alloy may contain amounts of other elements such as iron, copper, and zinc, in comparatively small amounts, for improved mechanical properties and resistance to corrosion. The exact composition of AlSil OMg may vary depending on the specific manufacturing process used and the intended application of the alloy. Such an aluminum alloy is optimal for use in aircraft applications due to its high strength-to-weight ratio and resistance to corrosion, as well as optimal for use in additive manufacturing processes to produce highly precise and complex geometries.

As shown in FIG. 4A, an energy absorber 400 as manufactured and/or thermally treated according to above methods, may be utilized in an energy attenuation system provided in an aircraft, such as a helicopter seating application. In use, a seat may be configured to act in a predefined manner in response to a high g-force event (e.g., 13-14.5 times the acceleration of gravity). The energy absorber 400 is configured as a collapsible structure usable as a single use feature. In use, at the failure of a primary seat element (e.g., predefined threshold force value), the energy absorber 400 may be in contact with a separate element movable along a motion path. The energy absorber 400 plastically deforms to slow the acceleration of the separate element. In embodiments, the energy absorber may be configured to collapse at successive longitudinal portions in response to correspondingly successive compressive forces applied by the separate element.

In embodiments, the energy absorber 400 may include an elongated hub 402, an elongated exterior skin 404 eccentrically positioned in surrounding relation to the elongated hub 402, and a plurality of radially-extending elongated spokes 406 extending between the hub 402 and the skin 404. Each elongated spoke 406 may extend radially outward from an exterior surface of the elongated hub 402 to an interior surface of the elongated exterior skin 404 and may be tapered along a length thereof. The elongate hub 402, the elongated exterior skin 404, and each of the plurality of spokes 406 may be symmetrical about a central longitudinal axis of the elongated hub 402, and each elongated spoke 406 may be substantially uniformly distant from neighboring elongated spokes 406 about the elongated hub 402, and the elongated exterior skin 404 may take the form of a circular element or a polygonal element. In the latter case, the polygonal element may be defined such that each vertex 408 is provided at a location at which the elongated exterior skin 404 is connected to a distal edge of a corresponding one of the elongated spokes 406.

In embodiments, the energy absorber may be a thin-walled or multi-walled structure. In embodiments, a variable compressibility profile may be achieved by the shape of the elongated spokes 406. For example, the elongated spokes 406 may have a first thickness proximal to one end of the energy absorber 400, and a second thickness, different from the first thickness, proximal to the opposite end of the energy absorber 400. In embodiments, each of the elongated spokes 406 may taper gradually from one end to the other end of the energy absorber 400 such that energy absorption performance increases as the energy absorber continues to compress axially.

FIG. 4B shows the energy absorber 400 in a crushed condition (i.e., plastically deformed). In use, the energy absorber formed as a column is configured to crush by way of buckling and successive crushing for energy absorption. In other embodiments, the energy absorber may be in the form of a lattice structure and may or may not include one solid end.

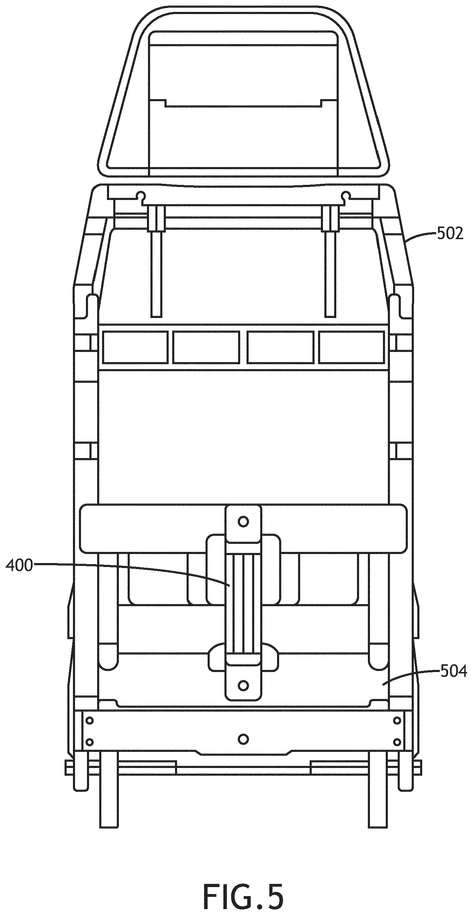

FIG. 5 illustrates the energy absorber 400 implemented in a seating application wherein the energy absorber is coupled between a seat 502 movable relative to a supporting seat frame 504. In embodiments, the energy absorber 400 may form a dynamic connection between a seat element and a frame element. In use, in the absence of force on the energy absorber 400 and/or on the attached elements meeting a predetermined threshold force, the energy absorber 400 may act as a rigid link interconnecting the elements. When a predetermined threshold force is exceeded, the energy absorber 400 undergoes a plastic deformation (i.e., without recovery) in a predictable manner. To attenuate the force on the attached elements, the energy absorber 400 deforms according to the acting force. For example, the threshold force may correspond to a compressive threshold that when met causes the energy absorber 400 to compress.

While the disclosure is provided in detail in connection with only a limited number of embodiments, it should be readily understood that the disclosure is not limited to such disclosed embodiments. Rather, the disclosure can be modified to incorporate any number of variations falling within the scope of the invention as defined by the claims. Additionally, while various embodiments of the disclosure have been described, it is to be understood that the exemplary embodiment(s) may include only some of the described exemplary aspects.

## Claims

1. A method of manufacturing an energy absorber, the method comprising the steps of:
providing (102) a build plate;
building, by an additive manufacturing process, an energy absorber atop the build plate;
heating (106) the build plate including the built energy absorber in a heating furnace to a solutionizing temperature in a range of 300°C to 550°C;
maintaining (108) the solutionizing temperature for 4 to 6 hours;
water quenching (110) the heated build plate including the built energy absorber;
removing (112) the built energy absorber from the build plate.

2. A method of thermally treating an additively manufactured energy absorber, the method comprising the steps of:
providing a build plate including a built, by an additive manufacturing process, energy absorber positioned atop the build plate;
heating the build plate including the built energy absorber in a heating furnace to a solutionizing temperature in a range of 300°C to 550°C;
maintaining the solutionizing temperature for 4 to 6 hours;
water quenching the heated build plate including the built energy absorber;
removing the built energy absorber from the build plate; and
optionally finish processing the built energy absorber.

3. The method according to claim 1 or 2, further comprising finish processing (114) the built energy absorber.

4. The method according to claim 1, 2 or 3, wherein the solutionizing temperature is in the range of 350°C to 500°C, or wherein the solutionizing temperature is in the range of 400°C to 450°C, or wherein the solutionizing temperature is about 430°C.

5. The method according to any preceding claim, wherein the energy absorber is a composition of AlSi10Mg.

6. The method according to any preceding claim, wherein the additive manufacturing process is at least one of selective laser melting, SLM, and electron beam melting, EBM.

7. The method according to any preceding claim, wherein a ramp-up rate to the solutionizing temperature is about 10°C per minute.

8. The method according to claim 3 or any claim dependent thereon, wherein the finish processing comprises at least one polishing process.

9. The method according to any preceding claim, wherein the built energy absorber is a collapsible structure comprising a hub, an exterior skin surrounding the hub, and a plurality of spokes extending outwardly from the hub to the exterior skin, wherein each spoke is tapered along a length thereof.

10. The method according to claim 9, wherein:
the hub, the exterior skin, and the plurality of spokes are symmetric about a central longitudinal axis of the hub;
each spoke is uniformly distant from neighboring spokes about the hub; and
the exterior skin is polygonal with each vertex being connected to a spoke.

11. The method according to claim 2 or any claim dependent thereon, wherein a height of the built energy absorber is no more than about 5 inches (12.7 cm), and an outer diameter of the built energy absorber is no more than about 2 inches (5.08 cm).
